# EUROPEAN PATENT SPECIFICATION

(11) **EP 1 559 735 B1**
(45) Date of publication and mention of the grant of the patent: **26.09.2007**
(21) Application number: 03810600.1
(22) Date of filing: 05.11.2003
(51) Int. Cl.: C08G 59/40, G02F 1/1339

(54) **SEALING MATERIAL FOR LIQUID CRYSTAL AND LIQUID CRYSTAL DISPLAY CELL USING SAME**
DICHTUNGSMATERIAL FÜR FLÜSSIGKRISTALL UND FLÜSSIGKRISTALLANZEIGEZELLE DAMIT
MATERIAU DE SCELLEMENT POUR CRISTAL LIQUIDE ET CELLULE D'AFFICHAGE A CRISTAUX LIQUIDES UTILISANT LEDIT MATERIAU

(30) Priority: 06.11.2002 JP 2002321922
(43) Date of publication of application: 03.08.2005
(73) Proprietor: NIPPON KAYAKU KABUSHIKI KAISHA, Tokyo 102-8172 (JP)
(72) Inventor: ASANO, Toyohumi, Saitama-shi, Saitama 338-0001 (JP); SATO, Toshiya, Saitama-shi, Saitama 330-0835 (JP); KUDOU, Masaru, Saitama-shi, Saitama 338-0001 (JP); OCHI, Naoyuki, Saitama-shi, Saitama 330-0835 (JP); HIRANO, Masahiro, Ageo-shi, Saitama 362-0001 (JP); IMAIZUMI, Masahiro, Kita-ku, Tokyo 115-0052 (JP); NISHIHARA, Eiichi, Kita-ku, Tokyo 115-0042 (JP)
(74) Representative: Gille Hrabal Struck Neidlein Prop Roos
(86) International application number: PCT/JP2003/014100
(87) International publication number: WO 2004/041900

(56) References cited:
- EP-A1- 0 632 080
- JP-A- 2 223 954
- JP-A- 6 073 164
- US-A- 5 150 239
- DATABASE WPI Week 200144 Derwent Publications Ltd., London, GB; AN 2001-414008 XP002417512 -& JP 2001 133794 A (KYORITSU CHEM & CO LTD) 18 May 2001 (2001-05-18) -& US 2003/147034 A1 (KOJIMA KAZUYUKI [JP]) 7 August 2003 (2003-08-07)

## Description

### Technical Field

The present invention relates to a sealing material for liquid crystals and a liquid crystal display cell using the sealing material. More specifically, the present invention relates to a sealing material for liquid crystals that is mainly used in a method for manufacturing a liquid crystal display cell in which the liquid crystal is sealed, comprising: dropping a liquid crystal inside a bank of a photo-thermo-curing type sealing material for liquid crystals which is formed on one substrate; thereafter bonding the other substrate thereto; and curing the material through light-irradiation and heat treatment, and a liquid crystal display cell manufactured by using the sealing material.

### Background Art

In recent years, along with demands for large-size liquid crystal display cells, a so-called liquid-crystal dropping technique, which has higher productivity, has been proposed as a manufacturing method of a liquid-crystal display cell (see Japanese Patent Application Laid-Open Nos. 63-179323 and 10-239694). In these methods, a liquid crystal display cell in which a liquid crystal is sealed is manufactured by dropping the liquid crystal inside a bank of a sealing material for liquid crystals formed on one substrate, thereafter bonding the other substrate thereto.

In the liquid-crystal dropping technique, however, the sealing material for liquid crystals in an uncured state is made in contact with the liquid crystal, with the result that, upon manufacturing a liquid crystal display cell, some components of the sealing material for liquid crystals are dissolved in the liquid crystal to cause a reduction in the specific resistance of the liquid crystal; consequently, this technique causes many problems when used as a mass-producing method for liquid crystal display cells.

With respect to a curing method after the bonding process of the sealing material for liquid crystals in the liquid-crystal dropping technique, three methods including a thermo-curing method, a photo-curing method and a photo-thermo-curing method, have been proposed. The thermo-curing method has problems in that liquid crystal tends to leak from the sealing material for liquid crystals that is being cured with a reduced viscosity due to expansion of the heated liquid crystal, and in that some components of the sealing material for liquid crystals with the reduced viscosity tend to be dissolved in the liquid crystal, and these problems are difficult to be resolved with the result that this technique has not been practically used.

Here, with respect to the sealing material for liquid crystals to be used in the photo-curing method, two kinds of photopolymerization initiators, that is, a cation polymerizable type and a radical polymerizable type, have been proposed. With respect to the sealing material for liquid crystals of the cation polymerizable type, since ions are generated upon photo-curing, the ion components are eluted in the liquid crystal in a contact state when the sealing material of this type is used in the liquid-crystal dropping technique, resulting in a problem of a reduced specific resistance in the liquid crystal. Moreover, with respect to the sealing material for liquid crystals of the radical polymerizable type, since the curing shrinkage is large upon photo-curing, the resulting problem is that sufficient adhesion strength is not obtained. Another problem with both of the photo-curing methods of the cation polymerizable type and the radical polymerizable type is that since a light-shield portion in which the sealing material for liquid crystals is not exposed to light is left due to a metal wiring portion of an alley substrate of the liquid crystal display cell and a black matrix portion of a color filter substrate, the corresponding light-shield portion is uncured.

As described above, the thermo-curing and photo-curing methods have various problems, and in actual operation, the photo-thermo curing method is considered to be the most practical technique. The photo-thermo curing method is characterized by irradiating the sealing material for liquid crystals sandwiched by substrates with light to be primarily cured, and thereafter heating it so as to be secondarily cured. With respect to properties required for the sealing material for liquid crystals to be used for the photo-thermo curing method, it is important to prevent the sealing material for liquid crystals from contaminating the liquid crystal in respective processes before and after the light irradiation as well as before and after the heat-curing processes, and it is necessary to properly address the problem with the above-mentioned light-shield portion, that is, the problem of elution of the sealing material components into the liquid crystal when the portion uncured by light irradiation is thermally cured. The following solutions to the problems are proposed: (1) a low-temperature fast curing process is carried out prior to the elution of the sealing material components; and (2) the sealing material is made from components that hardly elute into the liquid crystal compositions. Of course, the low-temperature fast curing process simultaneously causes degradation in the pot life during use, resulting in a serious problem in practical use. For this reason, in order to achieve a sealing material for liquid crystals that provides a longer pot life, and hardly contaminates liquid crystals, it is necessary to comprise components that are hardly eluted into the liquid crystal composition. However, commonly well known epoxy resins, such as a bisphenol A type epoxy resin and a bisphenol F type epoxy resin, have a good compatibility with liquid crystals with the result that these resins are not suitable for the constituent component for the sealing material from the viewpoint of a contamination-preventive property.

Japanese Patent Application Laid-Open No. 2001-133794 has proposed that, in particular, in claim 1 as well as in paragraph 0021, a bisphenol A-type epoxy resin, which is partially (meth) acrylated and disclosed in Japanese Patent Application Laid-Open No. 5-295087, should be used as a main resin component for the sealing material for liquid crystals for use in the liquid-crystal dropping technique. In this case, however, although the (meth)acrylated resin has a reduction in solubility to liquid crystals, the degree of the reduction is not sufficient, and it is also difficult to solve a problem of the un-reacted remaining raw epoxy resin that contaminates liquid crystals.

As described above, the conventionally proposed photo-thermo curing type sealing material for liquid crystals used in the liquid-crystal dropping technique is far from satisfying all the properties such as a liquid crystal contamination-preventive property, an adhesion strength, a working time at room temperature and a low-temperature curing property.

### Disclosure of The Invention

### Problems to be solved by the invention

The objective of the present invention is to develop a sealing material for liquid crystals to be used for a liquid crystal display device to be manufactured through a liquid-crystal dropping technique, and more specifically, to develop a sealing material for liquid crystals to be used for a liquid crystal display device to be manufactured through the liquid-crystal dropping technique comprising dropping a liquid crystal inside a bank of a sealing material for liquid crystals formed on one substrate, thereafter bonding the other substrate thereto, irradiating a liquid-crystal sealed portion to light, and then heat-curing it. In other words, the objective of the present invention is to provide a sealing material for liquid crystals which hardly contaminates liquid crystals through the manufacturing process, shows excellent coating workability, bonding property and adhesion strength when applied to a substrate, and has a long working time (pot life) at room temperature and a low-temperature curing property.

### Means to solve the problems

As a result of extensive investigations to solve the above-mentioned problems, the present inventors have found that this object can be attained by providing a resin composition having a specific composition, and the present invention has been accomplished based on this finding.

That is, the present invention relates to:
(1) a sealing material for liquid crystals comprising: (A) as a curing resin a mixture of (a) an epoxy group-containing curing resin and (b) a (meth)acryloyl group-containing curing resin, or (c) a curing resin containing an epoxy group and a (meth)acryloyl group; (B) a radical-forming photopolymerization initiator; (C) an isophthalic acid dihydrazide having an average particle diameter of 3µm or smaller; and (D) a filler having an average particle diameter of 3µm or smaller;
(2) the sealing material for liquid crystals according to (1), wherein (b) (meth)acryloyl group-containing curing resin is (meth)acrylate of difunctional or more epoxy resin;
(3) the sealing material for liquid crystals according to (1), wherein (c) curing resin containing an epoxy group and a (meth) acryloyl group is a partial (meth)acrylate of difunctional or more epoxy resin;
(4) the sealing material for liquid crystals according to (3), wherein the partial (meth)acrylate of difunctional or more epoxy resin is obtained by subjecting a difunctional or more epoxy resin to an esterification reaction with a (meth)acrylic acid of 20 to 80% equivalent of the epoxy group;
(5) the sealing material for liquid crystals according to any one of (2) to (4), wherein the difunctional or more epoxy resin is a bisphenol-type epoxy resin;
(6) the sealing material for liquid crystals according to (5), wherein the bisphenol-type epoxy resin is a bisphenol A-type epoxy resin;
(7) the sealing material for liquid crystals according to any one of (1) to (6), wherein (B) radical-forming photopolymerization initiator is a carbazole-based initiator;
(8) the sealing material for liquid crystals according to any one of (1) to (6), wherein (B) radical-forming photopolymerization initiator is an acridine-based initiator;
(9) the sealing material for liquid crystals according to any one of (1) to (8), wherein (D) filler having an average particle diameter of 3µm or smaller is an inorganic filler, and a content of the inorganic filler is in a range from 5 to 40% by weight in the sealing material for liquid crystals;
(10) the sealing material for liquid crystals according to any one of (1) to (9), further comprising (E) a silane coupling agent;
(11) the sealing material for liquid crystals according to (10), wherein (E) silane coupling agent contains an amino group;
(12) the sealing material for liquid crystals according to any one of (1) to (11), further comprising (F) a core-shell structural cross-linking rubber;
(13) a liquid crystal display cell which is sealed with a cured product of the sealing material for liquid crystals according to any one of (1) to (12); and
(14) a method for manufacturing a liquid crystal display cell constituted by two substrates, comprising: dropping a liquid crystal inside a bank of a sealing material for liquid crystals according to any one of (1) to (12), which is formed on one of the substrates; thereafter bonding the other substrate thereto; and curing the material.

### Effects of the present invention

The sealing material for liquid crystals, which shows excellent workability and bonding property when applied to a substrate, and has a long pot life, a high adhesion strength, a liquid crystal contamination-preventive property and a gap-forming function, is applied to the liquid-crystal dropping technique so that it becomes possible to manufacture a liquid crystal display cell that has a high yield and improved productivity.

### Best mode for carrying out the invention

The following description will discuss the present invention in detail.

In the present invention, as (A) curing resin a mixture of (a) an epoxy group-containing curing resin and (b) a (meth)acryloyl group-containing curing resin, or (c) a curing resin containing an epoxy group and a (meth) acryloyl group, is used.

With respect to (a) epoxy group-containing curing resin, although not particularly limited, a difunctional or more epoxy resin is preferably used, and examples thereof include: bisphenol A-type epoxy resins, bisphenol F-type epoxy resins, bisphenol S-type epoxy resins, phenolic novolak type epoxy resins, cresol novolak type epoxy resins, bisphenol A novolak type epoxy resins, bisphenol F novolak type epoxy resins, alicyclic epoxy resins, fatty chain epoxy resins, glycidyl ester-type epoxy resins, glycidyl amine-type epoxy resins, hydantoin-type epoxy resins, isocyanurate-type epoxy resins and phenolic novolak type epoxy resins having a triphenolic methane skeleton; and in addition to these, also include diglycidyl-etherified products of difunctional phenols, diglycidyl-etherified products of difunctional alcohols, and halides and hydrogenated products thereof. Among these, from the viewpoint of liquid crystal contamination-preventive property, epoxy resins having an alcoholic hydroxide group, epoxy resins having a sulfone group and epoxy resins having an ether bond are preferably used. More preferably, an epoxy resin, which is not eluted to the liquid crystal by 1% by weight or more, even when, after having been directly made in contact with liquid crystal the amount of which is ten times the amount of the epoxy resin, and allowed to stand still at 120°C for one hour, it is returned to room temperature, is used. Although not particularly limited, specific examples of such epoxy resins are first those epoxy resins represented by general formula (1) : 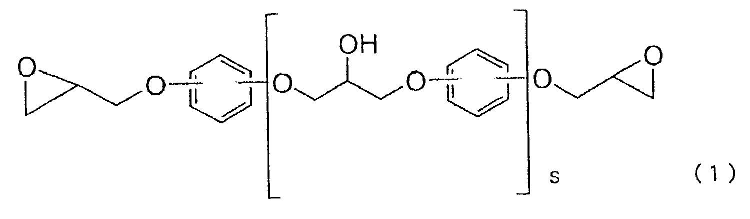 wherein, the number of repeating units s is an integer of 1 to 20. Among those represented by formula (1), more preferably, those epoxy resins represented by general formula (2) are used: 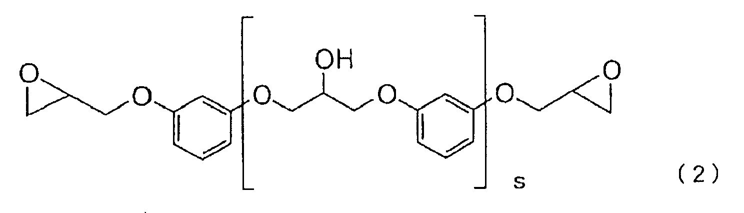 wherein, the number of repeating units s is an integer of 1 to 20.

Specific examples of such epoxy resins are second those epoxy resins represented by general formula (3): 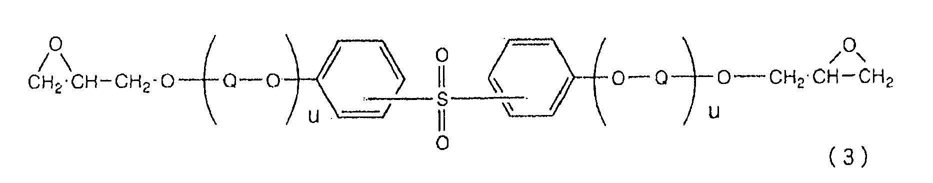 wherein, Q indicates a divalent hydrocarbon group having 2 to 6 carbon atoms, which may be the same or different, and u indicates an integer (average value) of 0 to 5, which may be the same or different. Here, examples of the divalent hydrocarbon group having 2 to 6 carbon atoms represented by Q include alkylene groups having 2 to 6 carbon atoms, such as ethylene, propylene, butylene and pentylene, and in the present invention, in particular, an ethylene group is preferably used. Moreover, the repeating unit u is preferably from 0.5 to 3. Among those represented by general formula (3), more preferably, those epoxy resins represented by general formula (4) are used: 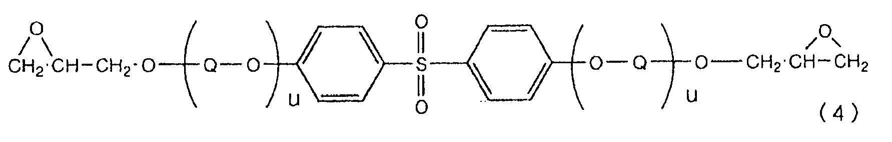 wherein, Q indicates a divalent hydrocarbon group having 2 to 6 carbon atoms, which may be the same or different, and u indicates an integer (average value) of 0 to 5, which may be the same or different. Here, Q and the repeating unit u are the same as explained in general formula (3).

Moreover, in the present invention, (a) epoxy group-containing curing resin preferably has an amount of hydrolytic chlorine of 600 ppm or less, more preferably, 300 ppm or less. The amount of hydrolytic chlorine exceeding 600 ppm tends to cause contaminations of the sealing material for liquid crystals to the liquid crystal. The amount of hydrolytic chlorine can be quantitatively determined by processes in which: for example, about 0.5 g of the epoxy resin is dissolved in 20 ml of dioxane, and after this mixture has been refluxed by using 5 ml of 1-N KOH/ethanol solution for 30 minutes, the resulting solution is titrated by a 0.01-N silver nitrate solution.

With respect to (b) (meth)acryloyl group-containing curing resin to be used in the present invention, although not particularly limited, compounds prepared by modifying difunctional or more epoxy resins into (meth)acryloyl compounds, are preferably used (in which "(meth)acryloyl" refers to "acryloyl" and/or "methacryloyl", and the same is true in the following description). With respect to the difunctional or more epoxy resins, examples thereof include: bisphenol A-type epoxy resins, bisphenol F-type epoxy resins, bisphenol S-type epoxy resins, thiodiphenol type epoxy resins, phenolic novolak type epoxy resins, cresol novolak type epoxy resins, bisphenol A novolak type epoxy resins, bisphenol F novolak type epoxy resins, alicyclic epoxy resins, fatty chain epoxy resins, glycidyl ester-type epoxy resins, glycidyl amine-type epoxy resins, hydantoin-type epoxy resins, isocyanurate-type epoxy resins and phenolic novolak type epoxy resins having a triphenolic methane skeleton; and in addition to these, also include diglycidyl-etherified products of difunctional phenols, diglycidyl-etherified products of difunctional alcohols, and halides and hydrogenated products thereof. Among these, those having a small solubility to liquid crystals are preferably used, and more specifically, (meth)acrylates of difunctional or more aromatic epoxy resins are preferably used. More preferably, (meth)acrylates of difunctional aromatic epoxy resins are used, and specific examples thereof include (meth)acrylates of bisphenol-type epoxy resins and (meth)acrylates of resorcine diglycidyl ether and hydroquinone diglycidyl ether.

With respect to (c) curing resin containing an epoxy group and a (meth)acryloyl group to be used in the present invention, although not particularly limited as long as it contains both of an epoxy group and a (meth)acryloyl group in the resin components, examples thereof include partially (meth)acryloylated epoxy resins. From the viewpoint of liquid crystal contamination-preventive property, partially (meth)acryloylated epoxy resins are preferably used. With respect to the epoxy resins that are raw materials for epoxy resins and (meth)acryloylated epoxy resins, although not particularly limited, the same compounds as those used in (a) epoxy group-containing curing resin are preferably used from the viewpoint of liquid crystal contamination-preventive property.

In the present invention, a monomer and/or an oligomer of (meth)acrylic acid ester capable of forming a curing resin may be used in combination in order to control the reactivity and the viscosity. Examples of such monomer and oligomer include: a reaction product between dipentaerythritol and (meth)acrylic acid and a reaction product between dipentaerythritol-caprolactone and (meth)acrylic acid; however, not particularly limited, any reaction product may be used as long as it is less likely to cause contamination to liquid crystals.

With respect to the ratio of each curing resin in the mixture of (a) an epoxy group-containing curing resin and (b) a (meth)acryloyl group-containing curing resin, the molar ratio of the epoxy group (EP) and the (meth)acryloyl group (AC), that is, (EP)/((EP) + (AC)), is from about 0.1 to about 0.8 in the total curing resin. The ratio greater than 0.8 tends to cause an insufficient photo-curing property, resulting in a weak temporarily adhesion strength. The ratio less than 0.1 tends to cause a reduction in the adhesion strength to the glass substrate after the curing process.

Moreover, the amount of hydrolytic chlorine in the epoxy resin to be used as the raw materials of (b) and (c) in the present invention is preferably 600 ppm or less, more preferably, 300 ppm or less. The amount of hydrolytic chlorine greater than 600 ppm tends to cause contamination of the sealing material for liquid crystals to the liquid crystal. The amount of hydrolytic chlorine can be quantitatively determined by processes in which: for example, about 0.5 g of the epoxy resin is dissolved in 20 ml of dioxane, and after this mixture has been refluxed by using 5 ml of 1-N KOH/ethanol solution for 30 minutes, the resulting solution is titrated by a 0.01-N silver nitrate solution.

The partially meta(acryloylated) epoxy resin of the present invention can be obtained by esterifying (meth)acrylic acid having a predetermined equivalent ratio, that is, preferably, 20 to 80 % equivalent, more preferably, 40 to 70 % equivalent per equivalent of epoxy group, with the aforementioned epoxy resin in the presence of a catalyst and a polymerization inhibitor. Upon the reaction, one kind or two kinds or more of the following materials may be added thereto as a diluent: aromatic hydrocarbons, such as toluene and xylene; esters such as ethyl acetate and butyl acetate; ethers such as 1,4-dioxane and tetrahydrofuran; ketones such as methylethyl ketone and methylisobutyl ketone; glycol derivatives such as butyl cerosolve acetate, carbitol acetate, diethyleneglycol dimethyl ether, and propyleneglycol monomethyl ether acetate; alicyclic hydrocarbons, such as cyclohexane and cyclohexanol; and petroleum solvents, such as petroleum ethers and petroleum naphthas. Upon using these diluents, since an evaporation under a reduced pressure is needed to be carried out after completion of the reaction, a solvent that has a low boiling point and is highly volatile is preferably used, and specific examples thereof include: toluene, methylethyl ketone, methylisobutyl ketone and carbitol acetate. Here, in order to accelerate the reaction, a catalyst is preferably used. Specific examples of usable catalysts include: benzyl dimethyl amine, triethyl amine, benzyl trimethyl ammonium chloride, triphenyl phosphine and triphenyl stibine. The amount of use thereof is preferably from 0.1 to 10% by weight, more preferably, from 0.3 to 5% by weight, with respect to the reaction material mixture. In order to prevent polymerization of the (meth)acrylic group during the reaction, a polymerization inhibitor is preferably used. With respect to the polymerization inhibitor, examples thereof include methoquinone, hydroquinone, methyl hydroquinone, phenothiazine and dibutylhydroxy toluene. The amount of use thereof is preferably from 0.01 to 1% by weight, more preferably, from 0.05 to 0.5% by weight, with respect to the mixture of the reaction raw materials. The reaction temperature is normally from 60 to 150°C, more preferably, from 80 to 120°C. Moreover, the reaction time is preferably from 5 to 60 hours.

With respect to (B) radical-forming photopolymerization initiator to be used in the present invention, any initiator may be used as long as it exerts its sensitivity in the vicinity of i-ray (365 nm) that gives comparatively small effects to the characteristics of liquid crystals, and hardly contaminates liquid crystals. Specific examples of usable radical-forming photopolymerization initiators include: benzyl dimethyl ketal, 1-hydroxy cyclohexyl phenyl ketone, diethyl thioxanthone, benzophenone, 2-ethyl anthraquinone, 2-hydroxy-2-methyl propiophenone, 2-methyl-[4-(methylthio)phenyl]-2-morphorino-1-propane, 2,4,6-trimethylbenzoyl diphenyl phosphine oxide, 3,6-bis(d2-methyl-2-morphorinopropionyl)-9-n-octyl carbazole and 1,7-bis(9-acridyl)heptane. Among these, 3,6-bis(d2-methyl-2-morphorinopropionyl)-9-n-octyl carbazole and 1,7-bis(9-acridyl)heptane are more preferably used.

The weight ratio of (B) radical-forming photopolymerization initiator to (b) or (c) component in the sealing material for liquid crystals of the present invention is normally from 0.1 to 10 parts by weight, preferably, from 0.5 to 5 parts by weight, with respect to 100 parts by weight of (b) or (c) component. The amount of the radical-forming photopolymerization initiator of less than 0.1 parts by weight tends to cause an insufficient photocuring reaction, while the amount exceeding 10 parts by weight, that is, an excessive amount of the initiator, tends to contaminate liquid crystals, and deteriorate the cured resin properties.

In the liquid-crystal dropping technique, it is important for the thermo-curing component in the sealing material for liquid crystals to quickly start a reaction uniformly when heated after irradiation with light, while preventing the sealing material for liquid crystals from contaminating the liquid crystals, and also to hardly cause a change in viscosity at room temperature during use, with a sufficient (long) working time. With respect to the thermo-curing conditions, in general, a low-temperature curing property at 120°C in about one hour is required so as to minimize a reduction in the characteristics of liquid crystals to be enclosed.

In order to simultaneously satisfy these requirements, a solid dispersion type potential curing agent is preferably used; however, in the case of the solid dispersion type potential thermo-curing agent, when some particles have large and irregular particle diameters, or when the dispersion is insufficient with biased particles, the curing process is not carried out uniformly to cause uncured components to elute into the liquid crystals, with the result that an insufficient display in liquid crystals tends to occur. For this reason, it is necessary to sufficiently disperse the thermo-curing agent; however, in the case when the thermo-curing agent is made finer in the particle diameter and uniformly dispersed, even if the solid dispersion type potential curing agent is used, the thermo-curing agent is dissolved in the resin even at room temperature to start a curing reaction, resulting in deterioration in the pot life.

In order to lower the curing temperature, in general, a curing accelerator is added, and an imidazole derivative, a phosphine compound, a tertiary amine or the like is often added. However, in the case of a liquid crystal composition having a low-voltage driving property and a high-speed response, this curing accelerator component is eluted into the liquid crystal to cause a reduction in the specific resistance value of the liquid crystal; consequently, it is not desirable to use the curing accelerator.

By taking these points into consideration, the sealing material for liquid crystals of the present invention uses (C) an isophthalic acid dihydrazide that has been finely ground to have an average particle diameter of 3µm or smaller as the thermo-curing component. The sealing material, which uses the isophthalic acid dihydrazide, exhibits a superior pot life at room temperature, and also has a superior curing property under conditions of 120°C for one hour. Since the isophthalic acid dihydrazide hardly has solubility to liquid crystals, the sealed liquid crystal is less susceptible to contaminations. When the average particle diameter of the isophthalic acid dihydrazide is too large, a problem of insufficient gap formation is raised upon bonding upper and lower glass substrates to each other when a liquid crystal cell with a narrow gap is manufactured; therefore, the average particle diameter needs to be 3µm or less, more preferably, 2µm or less. Moreover, for the same reason, the maximum particle diameter is preferably 8µm or less, more preferably, to 5µm or less. Here, the particle diameter of the curing agent was measured by using a laser diffraction-scattering type particle diameter distribution measuring device (dry type)(LMS-30, made by Seishin Enterprise Co., Ltd.). The average particle diameter is preferably adjusted so as not to become extremely small (for example, 0.1µm or less). Moreover, as the average particle diameter of the curing agent becomes smaller, the glass transition temperature of the sealing material for liquid crystals becomes higher after the curing; therefore, from the viewpoint of reliability of the sealing material, the average particle diameter is preferably 3µm or less.

The compounding ratio of (C) component in the sealing material for liquid crystals of the present invention is preferably from 0.8 to 3.0 equivalents, more preferably, from 0.9 to 2.0 equivalents, to the epoxy group of (a) or (c) component with respect to the active hydrogen equivalent. The amount of (C) component of less than 0.8 equivalents causes an insufficient thermo-curing reaction, resulting in lowering in the adhesion strength and glass transition temperature. In contrast, the amount of 3.0 equivalents or more causes the curing agent to remain, resulting in lowering in the adhesion strength and deterioration in the pot life.

With respect to (D) filler to be used in the present invention, an inorganic filler is preferably used. Specific examples of the usable inorganic filler include: fused silica, crystal silica, silicon carbide, silicon nitride, boron nitride, calcium carbonate, magnesium carbonate, barium sulfate, calcium sulfate, mica, talc, clay, alumina, magnesium oxide, zirconium oxide, aluminum hydroxide, magnesium hydroxide, calcium silicate, aluminum silicate, lithium aluminum silicate, zirconium silicate, barium titanate, glass fibers, carbon fibers, molybdenum disulfide and asbestos, and preferable examples include: fused silica, crystal silica, silicon nitride, boron nitride, calcium carbonate, barium sulfate, calcium sulfate, mica, talc, clay, alumina, aluminum hydroxide, calcium silicate and aluminum silicate; moreover, most preferably, fused silica, crystal silica, alumina and talc are used. Two or more kinds of these fillers may be mixed, and used.

The average particle diameter of the filter to be used in the present invention is 3µm or less, and when the average particle diameter is larger than 3µm, it is not possible to appropriately form a gap upon bonding upper and lower glass substrates to each other when a liquid crystal cell is manufactured.

The content of the filler in the sealing material for liquid crystals to be used in the present invention is normally from 5 to 40% by weight, more preferably, from 15 to 25% by weight. The content of the filler of less than 5% by weight causes lowering in the adhesion strength to the glass substrates and deterioration in the moisture-resistant reliability, and subsequently resulting in lowering in the adhesion strength after the moisture absorption. In contrast, the content of the filler exceeding 40 % by weight, which is an excessive content, makes it difficult to squash the particles, resulting in a failure in forming a gap of a liquid crystal cells.

In order to improve the adhesion strength, the sealing material for liquid crystals of the present invention preferably contains (E) a silane coupling agent. Examples of the usable silane coupling agent include: silane coupling agents, such as
3-glycidoxy-propyl-trimethoxy-silane,
3-glycidoxy-propyl-methyl-dimethoxy-silane,
3-glycidoxy-propyl-methyl-dimethoxy-silane,
2-(3,4-epoxycyclohexyl) ethyltrimethoxy-silane,
N-phenyl-γ-aminopropyl-trimethoxy-silane,
N-(2-aminoethyl)3-aminopropyl-methyl-dimethoxy-silane,
N-(2-aminoethyl) 3-aminopropyl-methyl-trimethoxy-silane,
3-aminoropyl-triethoxy-silane,
3-mercaptopropyl-trimethoxy-silane, vinyl-trimethoxy-silane,
N-(2-(vinylbenzylamino)ethyl)
3-aminoropyl-trimethoxy-silane hydrochloride,
3-methacryloxy-propyl-trimethoxy-silane,
3-chloropropyl-methyl-dimethoxy-silane and
3-chloropropyl-trimethoxy-silane. Two kinds or more of these silane coupling agents may be mixed, and used. Among these, a silane coupling agent containing an amino group is preferably used so as to obtain superior adhesion strength. By using the silane coupling agent, the adhesion strength is improved so that a sealing material for liquid crystals having a superior moisture-resistant reliability is obtained.

In order to improve the adhesion strength, the sealing material for liquid crystals of the present invention preferably contains (F) core-shell structural cross-linked rubber. Here, with respect to (F) core-shell structural cross-linked rubber to be used in the present invention, any rubber may be used as long as the rubber has a two-layered or three-layered structure, the core layer is a cross-linked rubber exhibiting a rubber elasticity, and the rubber has a structure in which a core layer is coated with a cross-linked polymer that has no rubber elasticity. With respect to the core layer, material examples thereof include: cross-linked polybutadiene, cross-linked acrylic acid alkyl copolymers and cross-linked polyisoprene, and with respect to the shell layer, material examples thereof include: alkyl acrylate-alkyl methacrylate copolymers, alkyl methacrylate-styrene copolymers and alkyl acrylate copolymers.

Among these, with respect to preferable combinations of the core layer and the shell layer, a combination in which the core layer is made from cross-linked polybutadiene and the shell layer is made from an alkyl acrylate-alkyl methacrylate copolymer or an alkyl methacrylate-styrene copolymer and a combination in which the core layer is made from a cross-linked alkyl acrylate copolymer and the shell layer is made from an alkyl acrylate copolymer are preferably used.

The average particle diameter of the core-shell structural cross-linked rubber is preferably 1µm or smaller. The average particle diameter of greater than 1µm tends to increase flow of the bonding layer upon thermally bonding the particles. In contrast, when the particle diameter is extremely small, the particles tend to easily aggregate with one another; therefore, the average particle diameter is preferably 0.1µm or greater.

With respect to the core-shell structural cross-linked rubber, for example, Paraloid EXL-2602 (made by Kureha Chemical Industry Co., Ltd.) and Paraloid EXL-2655 (made by Kureha Chemical Industry Co., Ltd.) are commercially available.

The amount of addition of (F) core-shell structural cross-linked rubber to the sealing material for liquid crystals of the present invention is preferably from 0.5% by weight or more to 10% by weight or less, more preferably, from 1% by weight or more to 5% by weight or less. The amount of addition of less than 0.5% by weight tends to fail to sufficiently improve the adhesion strength of the sealing material for liquid crystals, and the amount of addition exceeding 10% by weight tends to cause an extremely high viscosity, resulting in a failure in practical use.

Moreover, an organic solvent and an organic filler as well as additives such as a pigment, a leveling agent and an antifoaming agent, may be added to the sealing material for liquid crystals of the present invention, if needed.

The sealing material for liquid crystals of the present invention is manufactured by uniformly mixing the respective components by the use of a well-known mixing device, such as a roll mill, a sand mill and a ball mill. The resulting matter after the mixing process may be filtered in order to remove contaminants, if necessary.

A liquid crystal cell of the present invention has a structure in which: a pair of substrates, each having predetermined electrodes formed thereon, are placed face to face with each other with a predetermined gap in between, and the peripheral portion thereof is sealed with the sealing material for liquid crystals of the present invention, with a liquid crystal being enclosed in the gap. The kind of the liquid crystal to be enclosed is not particularly limited. Here, with respect to the substrates, a combination of substrates made from a material such as glass, quartz, plastic and silicon, at least one of which has a light transmitting property, are used. The manufacturing processes are, for example, carried out as follows: after spacers (gap-controlling material) such as glass fibers have been applied to the sealing material for liquid crystals of the present invention, the sealing material for the liquid crystals is applied onto one of the paired substrates in a format of banks by using a dispenser or the like, and liquid crystal is then dropped inside the banks of the sealing material for liquid crystals, and the other glass substrate is superposed thereon under a vacuum condition so that a gap-adjusting process is carried out. After the formation of the gap, ultraviolet rays are irradiated to the liquid-crystal sealed portion by using an ultraviolet-ray irradiation device so that the corresponding portion is photo-cured. The dose of ultraviolet-ray irradiation is normally from 500 mJ/cm² to 6000 mJ/cm², preferably, from 1000 mJ/cm² to 4000 mJ/cm². Thereafter, a curing process is carried out at a temperature of 90 to 130°C for one to two hours so that a liquid crystal display cell of the present invention can be obtained. With respect to the spacers, for example, glass fibers, silica beads, polymer beads and the like are used. Although different depending on the purposes, the diameter of the spacers is normally from 2 to 8µm, preferably, from 4 to 7µm. The amount of use thereof is normally from 0.1 to 4 parts by weight, preferably, from 0.5 to 2 parts by weight, more preferably, from 0.9 to 1.5 parts by weight, with respect to 100 parts by weight of the sealing material for liquid crystals of the present invention.

The sealing material for liquid crystals of the present invention, which hardly contaminates liquid crystals through all the manufacturing processes, shows excellent coating workability and bonding property when applied to a substrate, and a high adhesion strength, and also has a long working time (pot life) at room temperature and a low-temperature curing property. The liquid crystal cell of the present invention, thus obtained, is free from an insufficient display due to liquid crystal contaminations, and exhibits a high adhesive property and superior moisture-resistant reliability.

### EXAMPLES

The following description will discuss the present invention in detail by means of examples.

### Synthesis example 1: Synthesis of DRGE (multimer of resorcine diglycidyl ether)

### Synthesis of resorcine glycidyl etherified product

Resorcine (5500 g), epichlorohydrin (37000 g) and tetramethyl ammonium chloride (500 g) were mixed, and dissolved while the mixture was being stirred, and this was then heated to 70°C. Next, sodium hydroxide (4000 g) in the form of flakes was added thereto in a divided manner in 100 minutes, and this was then subjected to a post reaction at 70°C for one hour. Upon completion of the reaction, water (15000 g) was added thereto and washed, and excessive epichlorohydrin and the like were evaporated from the oil layer at 130°C under reduced pressure. Methylisobutyl ketone (22200 g) was added to the residue so as to be dissolved, and this was heated to 70°C. A sodium hydroxide aqueous solution (30 %, 1000g) was added thereto while the mixture was being stirred, and this was allowed to react for one hour, and after this had been washed with 5550 g of water three times, the methylisobutyl ketone was then evaporated at 180°C under reduced pressure to obtain 10550 g of diglycidylated product of resorcine. The resulting epoxy resin had an epoxy equivalent weight of 129 g/eq. This glycidylated product of resorcine was analyzed through gel permeation chromatography (GPC: detector UV 254 nm), and the results indicated that resorcine diglycidyl ether (hereinafter, referred to as "RGE" or "mono-nuclide") was generated by 73 % by area, while 15 % by area of di-nuclide and tri-nuclide or more ("di-nuclide or more" is referred to as "DRGE"), which had an alcoholic hydroxide group in the structure thereof, were contained.

### (2) Purification by molecular distillation

The diglycidylated product (5692 g) of resorcine, obtained in the above-mentioned (1), was separated into RGE and DRGE by using a molecular distillation device made by Asahi Seisakusho Inc. The conditions of the molecular distillation device were: the degree of vacuum: 4Pa, distilling temperature (jacket inner temperature): 188°C, and condenser temperature: 15°C.
Three-path processes were carried out under these conditions until RGE, which was a low-boiling-temperature component, was no longer distilled. After the three-path processes, 847 g (15 % by weight) of a high-boiling-temperature component was obtained, and this component was analyzed through GPC and GC-MS; thus, it was confirmed that only DRGE was separated with RGE having been excluded. The di-nuclide of DRGE (compound represented by the aforementioned general formula (2) in which s corresponds to 1) was contained by 80 % by area, and the tri-nuclide of DRGE (compound represented by the aforementioned general formula (2) in which s corresponds to 2) was contained by 20 % by area. Here, for reference, with respect to the components on the low-boiling-temperature side, according to the GPC analysis, not less than 99 % thereof was occupied by RGE. The components had a solubility of 0.5 % to liquid crystal (MLC-6866-100 (made by Merck Japan Co., Ltd.).

### Synthesis Example 2: Synthesis of EOBisS-EP (Ethyleneoxide added bisphenol S-type epoxy resin)

Into a flask equipped with a thermometer, a dropping funnel, a condenser and a stirring device, ethylene oxide added bisphenol S (169 parts by weight) (trade name: SEO-2; made by Nicca Chemical Co., Ltd., melting point: 183°C, purity: 99.5 %), epichlorohydrin (370 parts by weight), dimethyl sulfoxide (185 parts by weight) and tetramethyl ammonium chloride (5 parts by weight) were charged and dissolved while being stirred, and this mixed solution was heated to 50°C. Next, sodium hydroxide (60 parts by weight) in the form of flakes was added thereto in a divided manner in 100 minutes, and this was then subjected to a post reaction at 50°C for three hours. Upon completion of the reaction, water (400 parts by weight) was added thereto, and washed. Excessive epichlorohydrin and the like were evaporated from the oil layer at 130°C under a reduced pressure by using a rotary evaporator. Methylisobutyl ketone (450 parts by weight) was added to the residue so as to be dissolved, and this was heated to 70°C. A sodium hydroxide aqueous solution (30 %, 10 parts by weight) was added thereto while the mixture was being stirred, and this was allowed to react for one hour, and after having been washed with water three times, and the methylisobutyl ketone was evaporated at 180°C under a reduced pressure by using a rotary evaporator to obtain 212 parts by weight of liquid-state epoxy resin B represented by the following formula (5). The resulting epoxy resin had an epoxy equivalent weight of 238 g/eq, with a viscosity at 25°C being 113400 m Pa·s (which was crystallized when left at room temperature). It had a solubility of 0.05 % to liquid crystal (MLC-6866-100).

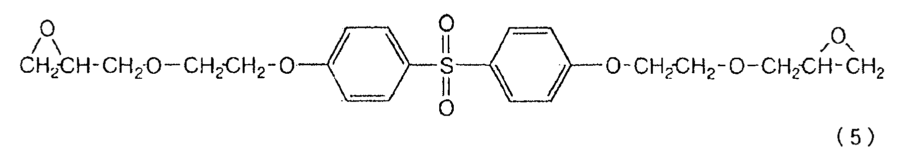

### Synthesis Example 3: Synthesis of bisphenol F type epoxy resin epoxy acrylate

Bisphenol F-type epoxy resin (RE-404P; epoxy equivalent weight: 160 g/eq, amount of hydrolysis: 30 ppm, made by Nippon Kayaku Co., Ltd.) was dissolved in toluene, and dibutylhydroxy toluene was added to this as a polymerization initiator, and the mixed solution was heated to 60°C. Then, to this was added acrylic acid having a 100 % equivalent weight of epoxy groups and further heated to 80°C, and to this was further added trimethyl ammonium chloride serving as a reaction catalyst, and the resulting solution was stirred at 98°C for about 50 hours. The resulting reaction solution was washed with water, and toluene was evaporated to obtain epoxy acrylate of bisphenol F epoxy. This had a viscosity at 25°C of 140 Pa·s. This also had a solubility of 0.3 % to liquid crystal (MLC-6866-100).

### Example 1

Epoxy resin DRGE (20 parts by weight) of synthesis example 1, bisphenol F type epoxy resin epoxy acrylate (80 parts by weight) of synthesis example 3 and 3,6-bis(2-methyl-2-morphorinopropionyl)-9-n-octyl carbazole (1.8 parts by weight) (Adeka Optomer-N-1414; made by Asahi Denka Kogyo Co., Ltd.) serving as a radical-forming photopolymerization initiator were heated and dissolved at 90°C to obtain a resin solution. After having been cooled to room temperature, to this were added 0.2 parts by weight of an amino silane coupling agent (KBM-603, N-β(aminoethyl) γ-aminopropyltrimethoxy silane, made by Shin-Etsu Silicone Co., Ltd.), 9.3 parts by weight of isophthalic acid dihydrazide (trade name IDH-S; prepared by finely grinding a material of jet-mill ground-grade made by Otsuka Chemical Co., Ltd. by using a jet mill; melting point 224°C, active hydrogen equivalent weight 48.5 g/eq; average particle diameter 1.7µm; maximum particle diameter 7µm), 10 parts by weight of fused ground silica (Crystalite 1FF made by Tatsumori Co. , Ltd.; average particle diameter 1.0µm), 10 parts by weight of spherical silica (SS-15, made by Osaka Kasei Co., Ltd., average particle diameter 0.5µm) and 10 parts by weight of talc (HTPultra 5C, made by Tomoe Engineering Co., Ltd.; average particle diameter 0.5µm), and this mixture was mixed and kneaded by using three rolls, and stirred and defoamed by using a planetary mixer, and then filtered to obtain a sealing material for liquid crystals of the present invention. The sealing material for liquid crystals had a viscosity of 350 Pa·s (25°C) (measured by an R-type viscometer (made by Toki Sangyo Co., Ltd.)).

### Example 2

EOBisS-EP (20 parts by weight) of synthesis example 2, bisphenol F type epoxy resin epoxy acrylate (80 parts by weight) of synthesis example 3 and 3,6-bis(2-methyl-2-morphorinopropionyl)-9-n-octyl carbazole (1.8 parts by weight) (Adeka Optomer-N-1414; made by Asahi Denka Kogyo Co., Ltd.) serving as a radical-forming photopolymerization initiator were heated and dissolved at 90°C to obtain a resin solution. After having been cooled to room temperature, to this were added 0.2 parts by weight of an amino silane coupling agent (KBM-603, N-β(aminoethyl) γ-aminopropyltrimethoxy silane, made by Shin-Etsu Silicone Co., Ltd.), 9.3 parts by weight of isophthalic acid dihydrazide (trade name IDH-S; prepared by finely grinding a material of jet-mill ground-grade made by Otsuka Chemical Co., Ltd. by using a jet mill; melting point 224°C, active hydrogen equivalent weight 48.5 g/eq; average particle diameter 1.7µm; maximum particle diameter 7µm), 10 parts by weight of fused ground silica (Crystalite 1FF made by Tatsumori Co., Ltd.; average particle diameter 1.0µm), 10 parts by weight of spherical silica (SS-15, made by Osaka Kasei Co., Ltd., average particle diameter 0.5µm), and 10 parts by weight of talc (HTPultra 5C, made by Tomoe Engineering Co., Ltd.; average particle diameter 0.5µm), and this mixture was mixed and kneaded by using three rolls, and stirred and deformed by using a planetary mixer, and then filtered to obtain a sealing material for liquid crystals of the present invention. The sealing material had a viscosity of 400 Pa·s (25°C) (measured by an R-type viscometer (made by Toki Sangyo Co., Ltd.).

### Example 3

Bisphenol A-type liquid-state epoxy resin (RE-310P; epoxy equivalent weight: 170 g/eq, amount of hydrolytic chlorine: 120 ppm, made by Nippon Kayaku Co., Ltd.) was allowed to react with acrylic acid having 60 % equivalent weight of epoxy groups, and after this had been purified through a liquid-separating process of ion exchange water/toluene, toluene was evaporated to obtain a 60 % partially acrylated epoxy resin. The resulting partially acrylated epoxy resin had an epoxy equivalent weight of 540 g/eq. The partially acrylated epoxy resin, thus obtained (100 parts by weight) and 3,6-bis(2-methyl-2-morphorinopropionyl)-9-n-octyl carbazole (1.8 parts by weight) (Adeka Optomer-N-1414; made by Asahi Denka Kogyo Co., Ltd.) serving as a radical-forming photopolymerization initiator were heated and dissolved at 90°C to obtain a resin solution. After having been cooled to room temperature, to this were added 1.2 parts by weight of an amino silane coupling agent (KBM-603, N-β(aminoethyl) γ-aminopropyltrimethoxy silane, made by Shin-Etsu Silicone Co., Ltd.), 9.3 parts by weight of isophthalic acid dihydrazide (trade name IDH-S; prepared by finely grinding a material of jet-mill ground-grade made by Otsuka Chemical Co., Ltd. by using a jet mill; melting point 224°C, active hydrogen equivalent weight 48.5 g/eq; average particle diameter 1.7µm; maximum particle diameter 7µm), 10 parts by weight of fused ground silica (Crystalite 1FF made by Tatsumori Co., Ltd.; average particle diameter 1.0µm), 10 parts by weight of spherical silica (SS-15, made by Osaka Kasei Co., Ltd., average particle diameter 0.5µm) and 10 parts by weight of talc (HTPultra 5C, made by Tomoe Engineering Co., Ltd.; average particle diameter 0.5µm), and this mixture was mixed and kneaded by using three rolls to obtain a sealing material for liquid crystals of the present invention. The sealing material had a viscosity of 300 Pa·s (25°C) (measured by an R-type viscometer (made by Toki Sangyo Co., Ltd.).

### Example 4

The same components and manufacturing method as those of example 3 were used except that an isophthalic acid dihydrazide that had been adjusted to an average particle diameter of 1.4µm and the maximum particle diameter of 5µm to obtain a sealing material for liquid crystals. The sealing material had a viscosity of 300 Pa·s (25°C).

### Example 5

Epoxy resin DRGE (20 parts by weight) of synthesis example 1, bisphenol F type epoxy resin epoxy acrylate (80 parts by weight) of synthesis example 3 and 3,6-bis(2-methyl-2-morphorinopropionyl)-9-n-octyl carbazole (1.8 parts by weight) (Adeka Optomer-N-1414; made by Asahi Denka Kogyo Co., Ltd.) serving as a radical-forming photopolymerization initiator were heated and dissolved at 90°C to obtain a resin solution. After having been cooled to room temperature, to this were added 0.2 parts by weight of an amino silane coupling agent (KBM-603, N-β(aminoethyl) γ-aminopropyltrimethoxy silane, made by Shin-Etsu Silicone Co., Ltd.), 9.3 parts by weight of isophthalic acid dihydrazide (trade name IDH-S; prepared by finely grinding a material of jet-mill ground-grade made by Otsuka Chemical Co., Ltd. by again using a jet mill; melting point 224°C; active hydrogen equivalent weight 48.5 g/eq; average particle diameter 1.7µm; maximum particle diameter 7µm), 20 parts by weight of alumina (SPC-A1; made by C.I. Kasei Co., Ltd., average particle diameter 1.0µm) and 5 parts by weight of rubber (Paraloid EXL-2655; made by Kureha Chemical Industry Co., Ltd., average particle diameter 200µm) were dispersion-mixed and kneaded by a mill to obtain a sealing material for liquid crystals of the present invention. The sealing material for liquid crystals had a viscosity of 350 Pa·s (25°C) (measured by an R-type viscometer (made by Toki Sangyo Co., Ltd.).

### Comparative Example 1

The same components and manufacturing method as those of example 3 were used except that an isophthalic acid dihydrazide of commercial jet-mill grinding grade, as it is, (trade name IDH-S; made by Otsuka Chemical Co., Ltd.; melting point 224°C, active hydrogen equivalent weight 48.5 g/eq; average particle diameter 3.9µm; maximum particle diameter 13µm) was used as a curing agent, to obtain a sealing material for liquid crystals. The sealing material for liquid crystals had a viscosity of 300 Pa·s (25°C).

### Comparative Example 2

The same components and manufacturing method as those of example 3 were used except that, in place of the isophthalic acid dihydrazide, 8.1 parts by weight of an adipic acid dihydrazide (made by Otsuka Chemical Co., Ltd.; melting point 180°C, active hydrogen equivalent weight 43.5 g/eq; average particle diameter 2µm, which is adjusted by jet-mill grinding) was used as a curing agent, to obtain a sealing material for liquid crystals. The sealing material for liquid crystals had a viscosity of 280 Pa·s (25°C).

### Comparative Example 3

The same components and manufacturing method as those of example 3 were used except that, in place of the isophthalic acid dihydrazide, 11.3 parts by weight of 2,6-naphthalene dicarboxylic acid dihydrazide (made by Japan Hydrazine Company Inc.; melting point higher than 300°C, active hydrogen equivalent weight 61.0 g/eq; average particle diameter 3µm, which is adjusted by jet-mill grinding) was used as a curing agent, to obtain a sealing material for liquid crystals. The sealing material for liquid crystals had a viscosity of 300 Pa·s (25°C).

### Comparative Example 4

The same components and manufacturing method as those of example 3 were used except that, in place of the isophthalic acid dihydrazide, 14.5 parts by weight of 1,3-bis(hydradinocarbonoethyl)-5-isopropyl hydantoin (trade name Amicure VDH; made by Ajinomoto-Fine-Techno Co., Inc.; melting point 120°C, active hydrogen equivalent weight 78.5 g/eq; average particle diameter 2.3µm, which is adjusted by jet-mill grinding) was used as a curing agent, to obtain a sealing material for liquid crystals. The sealing material for liquid crystals had a viscosity of 350 Pa·s (25°C).

### Liquid crystal contamination nature test (UV-irradiation and thermo-curing)

Measurements on specific resistance of contacted liquid crystal that is an index for contaminations to liquid crystal were carried out as follows: 0.1 g of a sealing material for liquid crystals was put into a sample bottle, and after 1 ml of liquid crystal (MLC-6866-100; made by Merck Co., Ltd.) had been added thereto, this was irradiated with ultraviolet rays of 3000 mJ/cm² by an UV irradiation device, and then put into an oven and held therein at 120°C for one hour; thereafter, this was allowed to stand still at room temperature for one hour. After these processes, only the liquid crystal was taken out of the sample bottle, and put in a liquid electrode device LE 21 (made by Ando Electric Co., Ltd.) so that, after applying a measuring voltage of 10 V thereto for 4 minutes, the specific resistance of the liquid crystal was measured by an Advantest-made electrometer R-8340. Table 1 shows the results of the test. In the case when the specific resistance value of the liquid crystal that had been made in contact with the sealing material for liquid crystals was not lowered by one digit or more in the number of digits of the specific resistance value of the contacted liquid crystal, in comparison with the specific resistance value of liquid crystal that had been subjected to the same processes without being made in contact with the sealing material for liquid crystals, the corresponding value was defined as "good"; in contrast, in the case when the specific resistance value was lowered by one digit or more, the corresponding value was defined as "bad". Moreover, the liquid crystal after the test was visually observed for any eluted or deposited matter.

### Liquid crystal contamination nature test (concerning only thermo-curing)

Measurements on specific resistance of contacted liquid crystal that is an index for contaminations to liquid crystal were carried out as follows: 0.1 g of a liquid crystal sealing material was put into a sample bottle, and after 1 ml of liquid crystal (MLC-6866-100; made by Merck Co., Ltd.) had been added thereto, this was put into an oven and held therein at 120°C for one hour, and this was then allowed to stand still at room temperature for one hour. After these processes, only the liquid crystal was taken out of the sample bottle, and put in a liquid electrode device LE 21 (made by Ando Electric Co., Ltd.) so that, after applying a measuring voltage 10 V thereto for 4 minutes, the specific resistance of the liquid crystal was measured by an Advantest-made electrometer R-8340. Table 1 shows the results of the test. In this case, in the case when the specific resistance value of the liquid crystal that had been made in contact with the sealing material for liquid crystals was not lowered by one digit or more in the number digits of the specific resistance value of the contacted liquid crystal, in comparison with the specific resistance value of liquid crystal that had been subjected to the same processes without being made in contact with the sealing material for liquid crystals, the corresponding value was defined as "good". Moreover, the liquid crystal after the test was visually observed for any eluted or deposited matter.

### Adhesion strength test

Glass fibers of 5µm (1 g) was added to the resulting sealing material for liquid crystals (100 g), and this mixture was mixed and stirred. The resulting sealing material for liquid crystals was applied onto a glass substrate of 50 mm × 50 mm, and a glass plate of 1.5 mm × 1.5 mm was bonded onto the sealing material for liquid crystals, and after having been irradiated with ultraviolet rays of 3000 mJ/cm² by an UV irradiation device, this was put into an oven and held therein at 120°C for one hour so as to be cured. The shearing adhesion strength of the glass plate was measured. Table 1 shows the results of the test.

### Pot life test

The resulting sealing material for liquid crystals was allowed to stand still at 30°C for 24 hours, and an increase in the viscosity rate (%) to the initial viscosity was measured.

### Glass transition temperature

A thin film having a thickness of 60µm was prepared by sandwiching the resulting sealing material for liquid crystals with polyethylene terephthalate (PET) films, and after having been irradiated with ultraviolet rays of 3000 mJ/cm² by an UV irradiation device, this was put into an oven and held therein at 120°C for one hour so as to be cured; thus, after the curing process, the PET films were peeled off to form a sample. The glass transition temperature of the sample was measured in the tensile mode by using a thermo-mechanical analyzer TMA (made by ULVAC-RIKO Inc.).

As indicated by Table 1, each of examples 1 to 5 provided a sealing material that showed excellent workability with little variations in viscosity. Moreover, with respect to the liquid crystal contamination nature upon thermal curing, good results were obtained in both of the variations in specific resistance value and visual observations.

In contrast, each of comparative examples 1 to 3 showed little variations in viscosity to provide a good sealing material from the viewpoint of workability. However, in comparative example 2, the adipic acid dihydrazide of the curing agent was eluted in the crystal upon thermal curing, with the result that, when cooled, white deposition was formed. Although the rate of change in specific resistance was small, the elution of impurities into the liquid crystal would cause an insufficient display, failing to provide a desirable sealing material. In the case of comparative example 3, since 2, 6-naphthalene dicarboxylic acid dihydrazide of the curing agent is poor in the reactivity at 120°C, the unreacted components thereof contaminate liquid crystal, consequently failing to a provide a sufficient adhesion strength. Moreover, since comparative example 4 had an extremely short pot life, and was poor in workability and not suitable for practical use. Comparisons among examples 3, 4 and comparative example 1 show that as the average particle diameter of isophthalic acid dihydrazide becomes smaller, the glass transition temperature becomes higher, making it possible to improve the reliability of the sealing material.

**[Table 1]**

| | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Viscosity (Pa·s) | 350 | 400 | 300 | 300 | 350 | 300 | 280 | 300 | 350 |
| Liquid crystal contamination nature test (UV + heat) | | | | | | | | | |
| Specific resistance value variation | Good | Good | Good | Good | Good | Good | Good | Bad | Good |
| Visual observation | No abnormality | No abnormality | No abnormality | No abnormality | No abnormality | No abnormality | White sludge | No abnormality | No abnormality |
| Liquid crystal contamination nature test (only heat) | | | | | | | | | |
| Specific resistance value variation | Good | Good | Good | Good | Good | Good | Good | Bad | Good |
| Visual observation | No abnormality | No abnormality | No abnormality | No abnormality | No abnormality | No abnormality | White sludge | No abnormality | No abnormality |
| Adhesion strength (MPa) | 80 | 80 | 75 | 75 | 80 | 70 | 75 | 40 | 75 |
| Pot life (viscosity increase: %) | 9 | 9 | 8 | 9 | 15 | 8 | 15 | 1 | 200 |
| Glass transition temperature of cured product (°C) | 94 | 96 | 87 | 100 | 95 | 65 | 100 | 40 | 85 |

## Claims

1. A sealing material for liquid crystals comprising: (A) as a curing resin a mixture of (a) an epoxy group-containing curing resin and (b) a (meth)acryloyl group-containing curing resin, or (c) a curing resin containing an epoxy group and a (meth)acryloyl group; (B) a radical-forming photopolymerization initiator; (C) an isophthalic acid dihydrazide having an average particle diameter of 3µm or smaller; and (D) a filler having an average particle diameter of 3µm or smaller.

2. The sealing material for liquid crystals according to claim 1, wherein (b) (meth)acryloyl group-containing curing resin is (meth)acrylate of difunctional or more epoxy resin.

3. The sealing material for liquid crystals according to claim 1, wherein (c) curing resin containing an epoxy group and a (meth)acryloyl group is a partial (meth)acrylate of difunctional or more epoxy resin.

4. The sealing material for liquid crystals according to claim 3, wherein the partial (meth)acrylate of difunctional or more epoxy resin is obtained by subjecting a difunctional or more epoxy resin to an esterification reaction with a (meth)acrylic acid of 20 to 80% equivalent of the epoxy group.

5. The sealing material for liquid crystals according to any one of claims 2 to 4, wherein the difunctional or more epoxy resin is a bisphenol-type epoxy resin.

6. The sealing material for liquid crystals according to claim 5, wherein the bisphenol-type epoxy resin is a bisphenol A-type epoxy resin.

7. The sealing material for liquid crystals according to any one of claims 1 to 6, wherein (B) radical-forming photopolymerization initiator is a carbazole-based initiator.

8. The sealing material for liquid crystals according to any one of claims 1 to 6, wherein (B) radical-forming photopolymerization initiator is an acridine-based initiator.

9. The sealing material for liquid crystals according to any one of claims 1 to 8, wherein (D) filler having an average particle diameter of 3µm or smaller is an inorganic filler, and a content of the inorganic filler is in a range from 5 to 40% by weight in the sealing material for liquid crystals.

10. The sealing material for liquid crystals according to any one of claims 1 to 9, further comprising (E) a silane coupling agent.

11. The sealing material for liquid crystals according to claim 10, wherein (E) silane coupling agent contains an amino group.

12. The sealing material for liquid crystals according to any one of claims 1 to 11, further comprising (F) a core-shell structural cross-linking rubber.

13. A liquid crystal display cell which is sealed with a cured product of the sealing material for liquid crystals according to any one of claims 1 to 12.

14. A method for manufacturing a liquid crystal display cell constituted by two substrates, comprising: dropping a liquid crystal inside a bank of a sealing material for liquid crystals according to any one of claims 1 to 12, which is formed on one of the substrates; thereafter bonding the other substrate thereto; and curing the material.

## Patentansprüche

1. Dichtungsmaterial für Flüssigkristalle, umfassend: (A) als Härtungsharz ein Gemisch aus (a) einem Epoxygruppen enthaltenden Härtungsharz und (b) einem (Meth)acryloylgruppen enthaltenden Härtungsharz, oder (c) ein Härtungsharz, enthaltend eine Epoxygruppe und eine (Meth)acryloylgruppe; (B) einen radikalbildenden Photopolymerisationsinitiator; (C) ein Isophthalsäuredihydrazid mit einem mittleren Partikeldurchmesser von 3 µm oder kleiner; und (D) einen Füllstoff mit einem mittleren Partikeldurchmesser von 3 µm oder kleiner.

2. Dichtungsmaterial für Flüssigkristalle nach Anspruch 1, wobei (b) das (Meth)acryloylgruppen enthaltende Härtungsharz ein (Meth)acrylat eines di- oder mehrfachfunktionellen Epoxyharzes ist.

3. Dichtungsmaterial für Flüssigkristalle nach Anspruch 1, wobei (c) das eine Epoxygruppe und eine (Meth)acryloylgruppe enthaltende Härtungsharz ein partielles (Meth)acrylat eines di- oder mehrfachfunktionellen Epoxyharzes ist.

4. Dichtungsmaterial für Flüssigkristalle nach Anspruch 3, wobei das partielle (Meth)acrylat des di- oder mehrfunktionellen Epoxyharzes erhalten wird, indem ein di- oder mehrfachfunktionelles Epoxyharz einer Veresterungsreaktion mit einer (Meth)acrylsäure mit 20 bis 80 % Äquivalenten der Epoxygruppe unterzogen wird.

5. Dichtungsmaterial für Flüssigkristalle nach einem der Ansprüche 2 bis 4, wobei das di- oder mehrfachfunktionelle Epoxyharz ein Epoxyharz vom Bisphenol-Typ ist.

6. Dichtungsmaterial für Flüssigkristalle nach Anspruch 5, wobei das Epoxyharz vom Bisphenol-Typ ein Bisphenol-A-Typ-Epoxyharz ist.

7. Dichtungsmaterial für Flüssigkristalle nach einem der Ansprüche 1 bis 6, wobei (B) der radikalbildende Photopolymerisationsinitiator ein Initiator auf Carbazol-Basis ist.

8. Dichtungsmaterial für Flüssigkristalle nach einem der Ansprüche 1 bis 6, wobei (B) der radikalbildende Photopolymerisationsinitiator ein Initiator auf Acridin-Basis ist.

9. Dichtungsmaterial für Flüssigkristalle nach einem der Ansprüche 1 bis 8, wobei (D) der Füllstoff mit einem mittleren Partikeldurchmesser von 3 µm oder kleiner ein anorganischer Füllstoff ist, und der Gehalt am anorganischen Füllstoff im Bereich von 5 bis 40 Gew.-% im Dichtungsmaterial für Flüssigkristalle ist.

10. Dichtungsmaterial für Flüssigkristalle nach einem der Ansprüche 1 bis 9, darüber hinaus umfassend (E) ein Silankupplungsmittel.

11. Dichtungsmaterial für Flüssigkristalle nach Anspruch 10, wobei das (E) Silankupplungsmittel eine Aminogruppe enthält.

12. Dichtungsmaterial für Flüssigkristalle nach einem der Ansprüche 1 bis 1 1 , darüber hinaus umfassend (F) einen strukturellen vernetzenden Kautschuk vom Kern-Hülle-Typ.

13. Flüssigkristall-Displayzelle, die mit einem gehärteten Produkt aus dem Dichtungsmaterial für Flüssigkristalle nach einem der Ansprüche 1 bis 1 2 abgedichtet ist.

14. Verfahren zur Herstellung einer Flüssigkristall-Displayzelle, die gebildet wird aus zwei Substraten, umfassend: Tropfen eines Flüssigkristalls in das Innere einer Bank aus einem Dichtungsmaterial für Flüssigkristalle nach einem der Ansprüche 1 bis 1 2, die auf einem der Substrate geformt wird; anschließend Binden des anderen Substrats daran; und Härten des Materials.

## Revendications

1. Matériau de scellement pour cristaux liquides comprenant : (A) comme résine durcisseuse, un mélange de (a) une résine durcisseuse contenant un groupe époxy et (b) une résine durcisseuse contenant un groupe (méth)acryloyle, ou (c) une résine durcisseuse contenant un groupe époxy et un groupe (méth)acryloyle ; (B) un initiateur de photopolymérisation générateur de radicaux ; (c) un dihydrazide d'acide isophtalique ayant un diamètre moyen de particules de 3 µm ou moins ; et (D) une charge ayant un diamètre moyen de particules de 3 µm ou moins.

2. Matériau de scellement pour cristaux liquides selon la revendication 1, dans lequel (b) la résine durcisseuse contenant un groupe (méth)acryloyle est un (méth)acrylate d'une résine époxy difonctionnelle ou de fonctionnalité supérieure.

3. Matériau de scellement pour cristaux liquides selon la revendication 1, dans lequel (c) la résine durcisseuse contenant un groupe époxy et un groupe (méth)acryloyle est un (méth)acrylate partiel d'une résine époxy difonctionnelle ou de fonctionnalité supérieure.

4. Matériau de scellement pour cristaux liquides selon la revendication 3, dans lequel le (méth)acrylate partiel de résine époxy difonctionnelle ou de fonctionnalité supérieure est obtenu en soumettant une résine époxy difonctionnelle ou de fonctionnalité supérieure à une réaction d'estérification avec un acide (méth)acrylique à raison de 20 à 80 % d'équivalent du groupe époxy.

5. Matériau de scellement pour cristaux liquides selon l'une quelconque des revendications 2 à 4, dans lequel la résine époxy difonctionnelle ou de fonctionnalité supérieure est une résine époxy du type bisphénol.

6. Matériau de scellement pour cristaux liquides selon la revendication 5, dans lequel la résine époxy du type bisphénol est une résine époxy du type bisphénol A.

7. Matériau de scellement pour cristaux liquides selon l'une quelconque des revendications 1 à 6, dans lequel (B) l'initiateur de photopolymérisation générateur de radicaux est un initiateur à base de carbazole.

8. Matériau de scellement pour cristaux liquides selon l'une quelconque des revendications 1 à 6, dans lequel (B) l'initiateur de photopolymérisation générateur de radicaux est un initiateur à base d'acridine.

9. Matériau de scellement pour cristaux liquides selon l'une quelconque des revendications 1 à 8, dans lequel (D) la charge ayant un diamètre moyen de particules de 3 µm ou moins est une charge minérale, et la teneur en charge minérale est comprise dans un intervalle de 5 à 40 % en poids dans le matériau de scellement pour cristaux liquides.

10. Matériau de scellement pour cristaux liquides selon l'une quelconque des revendications 1 à 9, comprenant de plus (E) un agent de couplage du type silane.

11. Matériau de scellement pour cristaux liquides selon la revendication 10, dans lequel (E) l'agent de couplage du type silane contient un groupe amino.

12. Matériau de scellement pour cristaux liquides selon l'une quelconque des revendications 1 à 11, comprenant de plus (F) un caoutchouc réticulant structural à noyau-enveloppe.

13. Cellule d'affichage à cristaux liquides, qui est scellée avec un produit durci du matériau de scellement pour cristaux liquides selon l'une quelconque des revendications 1 à 12.

14. Procédé de fabrication d'une cellule d'affichage à cristaux liquides constituée de deux substrats, comprenant les étapes consistant à : couler un cristal liquide à l'intérieur d'une bordure d'un matériau de scellement pour cristaux liquides selon l'une quelconque des revendications 1 à 12, qui est formée sur l'un des substrats ; puis y lier l'autre substrat ; et durcir le matériau.
